## Europäisches Patentamt

## European Patent Office

## Office européen des brevets

(11) Veröffentlichungsnummer: **0 043 384
B1**

(12) **EUROPÄISCHE PATENTSCHRIFT**

(45) Veröffentlichungstag der Patentschrift:
**16.01.85**

(21) Anmeldenummer: **80106463.5**

(22) Anmeldetag: **23.10.80**

(51) Int. Cl.⁴: **B 62 M . 17/00**, B 62 K 25/20

(54) **Hinterradführung für Zweiradfahrzeuge mit Kardanantrieb.**

(30) Priorität: **03.07.80  DE 8017869 U**

(43) Veröffentlichungstag der Anmeldung:
**13.01.82 Patentblatt 82/2**

(45) Bekanntmachung des Hinweises auf die Patenterteilung:
**16.01.85 Patentblatt 85/3**

(84) Benannte Vertragsstaaten:
**DE FR GB IT**

(56) Entgegenhaltungen:
**DE - A - 2 616 101
DE - B - 1 055 981
GB - A - 688 552
GB - A - 773 266
GB - A - 1 516 217
US - A - 2 077 628**

(73) Patentinhaber: **BAYERISCHE MOTOREN WERKE
Aktiengesellschaft, Postfach 40 02 40,
D-8000 München 40 (DE)**

(72) Erfinder: **Hinsberg, Rene, Valieystrasse 41,
D-8000 München 70 (DE)**
Erfinder: **Brenner, Horst, Bulachstrasse 24,
D-8061 Günding (DE)**

(74) Vertreter: **Dexheimer, Rolf, c/o Bayerische Motoren
Werke Aktiengesellschaft Postfach 40 02 40,
D-8000 München 40 (DE)**

ACTORUM AG

## Beschreibung

Die Erfindung bezieht sich auf eine Hinterradführung für Zweiradfahrzeuge mit Kardanantrieb, insbesondere für Motorräder, der im Oberbegriff des Hauptanspruches angegebenen Bauart.

Aus der DE-PS 1 055 981 ist eine Hinterradführung für ein Motarrad bekannt mit einer Doppelarmschwinge, bei der das Achsgehäuse auf der Radachse drehbar gelagert ist. Das relativ zur Doppelarmschwinge drehbeweglich angeordnete Achsgehäuse ist über einen gesonderten Lenker am Rahmen des Motorrades abgestützt. Dieser die Vortriebs- und Verzögerungsmomente gegen den Rahmen abstützende Lenker bildet mit der Doppelarmschwinge ein als Parallelogramm ausgelegtes Gelenkviereck.

Aus dem Heft 15/1979 der Zeitschrift «Motorrad» ist weiter eine Hinterradführung für ein Motorrad mit Kardanantrieb bekannt, bei der das Achsgehäuse über vier Radführungslenker zur reaktionsfreien Abstützung am Rahmen gelagert ist, wobei jeweils zwei Radführungslenker einer Fahrzeugseite ein als Parallelogramm gestaltetes Gelenkviereck bilden. Bei dieser Hinterradführung fällt keine der radseitigen Anlenkungen der Radführungslenker am Achsgehäuse mit der Hinterradachse zusammen, das Achsgehäuse weist demnach auf jeder Fahrzeugseite jeweils zwei, im Abstand zur Hinterachse angeordnete Anlenkungen für die Radführungslenker auf.

Nachteilig bei beiden Ausführungen von Parallelogramm-Schwingen ist die mit ihren Gelenken offenliegende Kardanwelle.

Die Kapselung der Kardanwelle durch Anordnung in einem Schwingenrohr der Hinterradführung ist sowohl für Zwei- wie auch für Einarmschwingen bekannt, als Beispiel für eine derartige Einarmschwinge ist auf die in Heft 1/1973 der Zeitschrift «Motorrad» beschriebene «Hägglund XM 72» verwiesen. Bei den bekannten Zwei- und Einarmschwingen ist das die Kardanwelle kapselnde Schwingenrohr jeweils mit dem Achsgehäuse fest verbunden, so dass die Vortriebs- und Verzögerungsmomente sowohl über die Einarmschwinge als auch über die Zweiarmschwinge am Rahmen des Zweirades abgestützt sind. Dadurch ergeben sich beim Betrieb des Motorrades die bekannten Fahrwerksreaktionen des «Aufstellens» bzw. «Absenkens» des Motorrades über dem Hinterrad.

Der Erfindung liegt die Aufgabe zugrunde, eine Hinterradführung für Zweiradfahrzeuge mit Kardanantrieb gemäss der im Oberbegriff des Hauptanspruches beschriebenen Art für eine gekapselt angeordnete Kardanwelle weiterzubilden mit im Aufbau geringem Aufwand.

Diese Aufgabe ist mit den im Kennzeichen des Hauptanspruches angegebenen Mitteln gelöst.

Das erfindungsgemäss an der Einarmschwinge angelenkte und am Rahmen des Zweiradfahrzeuges gesondert abgestützte Achsgehäuse ergibt gegenüber dem eingangs geschilderten Stand der Technik eine im Aufbau weniger aufwendige Hinterradführung mit den jeweils für sich bekannten Vorteilen einer reaktionsfreien Abstützung einerseits und einer schnellen Radmontage durch die Einarmschwinge andererseits.

In Weiterbildung der Erfindung nach Merkmalen des Anspruches 2 kann das Ausmass der Fahrwerksreaktionen in vorteilhafter Weise nach Bedarf festgelegt werden. Dies ist insbesondere vorteilhaft für Motorräder, die sowohl auf der Strasse als auch im Gelände verwendet werden.

Mit der Ausgestaltung der Erfindung nach Merkmalen des Anspruches 3 ist die Anlenkung der Einarmschwinge am Stutzen des Achsgehäuses voll gekapselt. Damit ergibt sich der Vorteil einer Schmierung durch Ölbad des zwischen der Ritzel- und der Kardanwelle angeordneten Kreuz- oder Gleichlaufgelenkes. Im Stutzen integrierte Lager der Einarmschwingen-Anlenkung können somit ohne besonderen Bauaufwand über das Ölbad geschmiert werden.

Mit der Gestaltung des Achsgehäuses nach Anspruch 4 sind für den Stutzen geringere Belastungen aus den Radlasten erzielt.

Ein nach Anspruch 5 gestalteter Stutzen am Achsgehäuse bietet bei der Umrüstung der Hinterradführung auf die erfindungsgemässe Ausbildung den Vorteil, dass das Achsgehäuse ohne konstruktive Abänderung weiterverwendet werden kann.

Die Erfindung ist anhand zweier, in der Zeichnung dargestellter Ausführungsbeispiele beschrieben.

Die Zeichnung zeigt in

Fig. 1 eine erste Ausführung einer Hinterradführung mit einem am Achsgehäuse angegossenen Stutzen, in

Fig. 2 eine zweite Ausführung einer Hinterradführung mit einem am Achsgehäuse angeschraubten Stutzen.

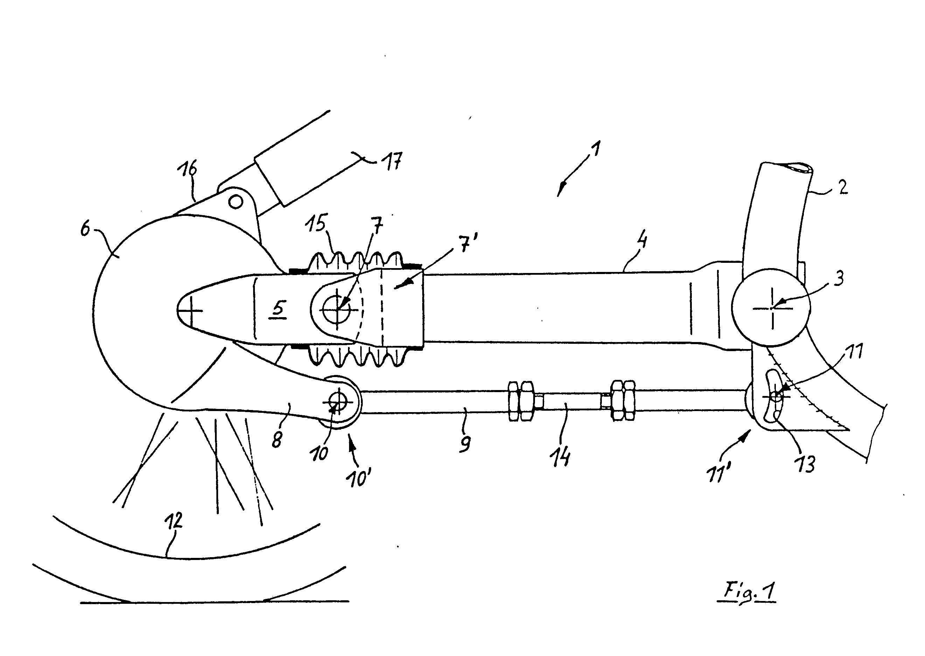

Eine Hinterradführung 1 nach Fig. 1 für ein Motorrad mit Kardanantrieb umfasst eine am Rahmen 2 um die Achse 3 schwenkbeweglich gelagerte Einarmschwinge 4. Die Einarmschwinge 4 ist radseitig mit einem Stutzen 5 eines die nicht gezeigte Antriebseinheit Tellerrad/Ritzel des Kardanantriebes aufnehmenden Achsgehäuses 6 um die Achse 7 gelenkig verbunden. Das Achsgehäuse 6 weist einen Arm 8 auf zur gelenkigen Verbindung mit einer Momentenstütze 9 um die Achse 10. Die Momentenstütze 9 ist am Rahmen 2 um die Achse 11 drehbar gelagert. Sämtliche Schwenkachsen 3, 7, 10 und 11 verlaufen durch die Eckpunkte eines Gelenkvierecks, das bei reaktionsfreier Abstützung des mit dem Hinterrad 12 in Wirkverbindung stehenden Achsgehäuses 6 am Rahmen 2 ein Parallelogramm bildet.

Je nach Verwendungszweck der Motorrades auf der Strasse und/oder im Gelände kann ein bestimmtes Restaufstellmoment in der Hinterradführung 1 erwünscht sein. Hierfür ist die Momentenstütze 9 in ihrer Anlenkstelle 11' in einem quer zur Einarmschwinge 4 gerichteten Langloch 13 verschieb- und feststellbar angeordnet und/

oder in ihrer Länge zwischen den Anlenkstellen 10' und 11' mittels einer eine Gewindespindel 14 umfassenden Einrichtung veränderbar ausgebildet.

Der Fig. 1 ist weiter zu entnehmen, dass die Anlenkstelle 7' der Einarmschwinge 4 am Stutzen 5 des Achsgehäuses 6 durch einen Faltenbalg 15 abgedeckt ist. Damit die in der Einarmschwinge 4 gekapselt angeordnete, nicht dargestellte Kardanwelle im Ölbad laufen kann, weist der Faltenbalg 15 beiderseits der Anlenkstelle 7' sowohl den Stutzen 5 als auch die Einarmschwinge 4 dicht umschliessende Endabschnitte auf.

Weiter zeigt die Fig. 1, dass das Achsgehäuse 6 ein Auge 16 zum Anschluss einer Federdämpfereinheit 17 aufweist.

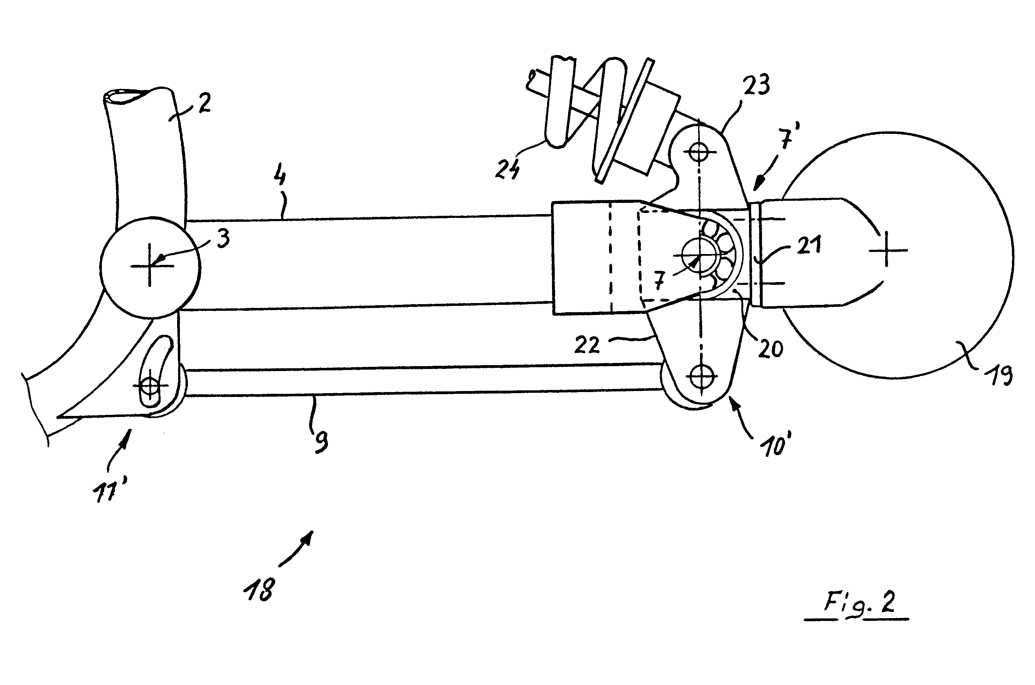

Die Hinterradführung 18 der Fig. 2 weist gegenüber der in Fig. 1 dargestellten Hinterradführung 1 einen am Achsgehäuse 19 gesondert angeordneten Stutzen 20 auf. Der Stutzen 20 ist über einen Flansch 21 mit dem Achsgehäuse 19 verschraubt. Zum Anschluss der Momentenstütze 9 ist am Stutzen 20 eine Konsole 22 angeordnet. Schliesslich ist der Stutzen 20 mit einer Konsole 23 zum Anschluss einer Feder-Dämpfereinheit 24 ausgerüstet. Mit dem Stutzen 20 kann ein bislang mit einer Einarmschwinge verschraubtes Achsgehäuse 19 ohne konstruktive Abänderung für die erfindungsgemäss gestaltete Hinterradführung 18 weiter verwendet werden.

Im übrigen sind in beiden Fig. 1 und 2 gleiche Teile mit gleichen Bezugsziffern belegt.

## Patentansprüche

1. Hinterradführung für Zweiradfahrzeuge mit Kardanantrieb, insbesondere für Motorräder, bei der
- ein Achsgehäuse (6) zur Aufnahme der mit dem Hinterrad (12) in Wirkverbindung stehenden Antriebseinheit Tellerrad/Ritzel des Kardanantriebes über in einem aus einer Hinterradschwinge (4) und einer Momentenstütze (9) gebildeten Gelenkviereck schwenkbar am Rahmen (2) gelagert ist und
- das Achsgehäuse (6) zur Aufnahme einer mit der Kardanwelle gelenkig verbundenen Ritzelwelle einen Stutzen (5) aufweist, dadurch gekennzeichnet,
- dass die Hinterradschwinge als Einarmschwinge (4) ausgebildet ist, die radseitig mit dem Stutzen (5, 20) des Achsgehäuses (6, 19) gelenkig in Verbindung steht und die Kardanwelle umschliesst.

2. Hinterradführung nach Anspruch 1, dadurch gekennzeichnet, dass die Momentenstütze (9) in einem in einer ihrer Anlenkstellen (11') quer zur Einarmschwinge (4) gerichteten Langloch (13) verschieb- und feststellbar angeordnet und/oder in ihrer Länge zwischen den Anlenkstellen (10', 11') veränderbar ausgebildet ist.

3. Hinterradführung nach Anspruch 1, dadurch gekennzeichnet, dass die Anlenkstelle (7') der Einarmschwinge (4) am Stutzen (5) des Achsgehäuses (6) durch einem Faltenbalg (15) abgedeckt ist, der beiderseits der Anlenkstelle sowohl den Stutzen als auch die Einarmschwinge dicht umschliessende Endabschnitte aufweist.

4. Hinterradführung nach Anspruch 1, dadurch gekennzeichnet, dass das Achsgehäuse (6) ein Auge (16) zum Anschluss einer Feder/Dämpfereinheit (17) und einen Arm (8) zum Anschluss der Momentenstütze (9) aufweist.

5. Hinterradführung nach Anspruch 1, dadurch gekennzeichnet, dass der Stutzen (20) gesondert am Achsgehäuse (19) angeordnet und mit Konsolen (22, 23) zum Anschluss einer Feder/Dämpfereinheit (24) sowie der Momentenstütze (9) ausgerüstet ist.

## Claims

1. A rear-wheel guide for a two-wheeled vehicle with a Cardan drive, especially for motorcycles, wherein
- an axle housing (6) for accommodating the drive unit, which comprises an axle-drive bevel wheel and pinion of the Cardan drive and is operationally connected to the rear wheel (12), is swivellably mounted on the frame (2) by way of a square hinge element comprising a rear-wheel rocker arm (4) and a momentum support (9), and
- the axle housing (6) has a socket (5) for accommodating a pinion shaft hinged to the Cardan shaft, characterized in that
- the rear-wheel rocker arm is designed as a single-arm rocker (4) which, at the wheel side, is hinged to the socket (5, 20) of the axle housing (6, 19) and encloses the Cardan shaft.

2. A rear-wheel guide according to claim 1, characterized in that the momentum support (9) can be displaced and immobilized in a slot (13) extending transversely of the single-arm rocker (4) in one of its linkage elements (11'), and/or is designed to be variable in length between the linkage elements (10', 11').

3. A rear-wheel guide according to claim 1, characterized in that the linkage element (7') associated with the single-arm rocker (4) is covered at the socket (5) of the axle housing (6) by a bellows (15) which, at both sides of the linkage element, has end portions which tightly enclose the sockets as well as the single-arm rocker.

4. A rear-wheel guide according to claim 1, characterized in that the axle housing (6) comprises an eyelet plate (16) for connecting a spring/shockabsorber unit (17), and an arm (8) for connecting the momentum support (9).

5. A rear-wheel guide according to claim 1, characterized in that the socket (20) is arranged separately on the axle housing (19) and is provided with brackets (22, 23) for connecting a spring/shockabsorber unit (24) as well as the momentum support (9).

## Revendications

1. Guidage de roue arrière pour véhicule à deux roues à entraînement par cardan, notamment pour motocyclettes, dans lequel un carter d'essieu (6) destiné à recevoir l'unité d'entraînement, roue à plateau et pignon de l'entraînement à cardan en liaison opérative avec la roue arrière (12) est supporté à pivotement sur le châssis (2), par l'intermédiaire d'une articulation carrée, formée par une biellette sur la roue arrière (4) et une barre (9) de transmission de couple, et le carter d'essieu (6) présentant un raccord de support (5), pour recevoir un arbre de pignon relié à articulation avec l'arbre de cardan, guidage caractérisé en ce que la biellette de roue arrière est constituée comme une biellette à un bras (4) qui, du côté roue, est reliée à articulation avec le raccord de support (5, 20) du carter d'essieu et enferme l'arbre de cardan.

2. Guidage de roue arrière suivant la revendication 1, caractérisé en ce que la barre de transmission de couple (9) est disposée pour pouvoir coulisser et être immobilisée, dans l'un de ses points d'articulation, dans un perçage oblong (13), orienté transversalement à la biellette à un bras (4) et/ou est constituée réglable dans sa longueur comprise entre les points d'articulation (10', 11').

3. Guidage de roue arrière suivant la revendication 1, caractérisé en ce que le point d'articulation (7') de la biellette à un bras (4) sur le raccord (5) du carter d'essieu (6) est recouvert par un soufflet à plis (15), lequel est pourvu, sur chaque côté du point d'articulation ainsi que du raccord, de portions d'extrémité entourant à joint étanche la biellette à un bras.

4. Guidage de roue arrière suivant la revendication 1, caractérisé en ce que le carter d'essieu (6) présente un œilleton (16) pour le raccordement d'une unité d'amortisseur à ressort (17), et un bras (8) pour le raccordement de la barre de transmission de couple (9).

5. Guidage de roue arrière suivant la revendication 1, caractérisé en ce que la pièce de raccord de support (20) est disposé spécialement sur le carter d'essieu (19) et elle est pourvue de consoles (22, 23) pour le raccord d'une unité d'amortisseur à ressort (24) ainsi que le raccord de la barre de transmission de couple (9).

*Fig.1*

Fig. 2

0 043 384